# EUROPÄISCHE PATENTSCHRIFT

(11) **EP 1 370 794 B1**
(45) Veröffentlichungstag und Bekanntmachung des Hinweises auf die Patenterteilung: **29.09.2004**
(21) Anmeldenummer: 01927788.8
(22) Anmeldetag: 23.03.2001
(51) Int. Cl.: F16L 59/02, F16L 59/06

(54) **PLATTEN- ODER HOHLZYLINDERFÖRMIGES ISOLIERTEIL**
SHEET- OR HOLLOW CYLINDER-SHAPED INSULATION PIECE
PIECE D'ISOLATION SOUS FORME DE PANNEAU OU DE CYLINDRE CREUX

(43) Veröffentlichungstag der Anmeldung: 17.12.2003
(73) Patentinhaber: Armacell Enterprise GmbH, 48153 Münster (DE)
(72) Erfinder: MANZO, Felice, I-28041 Arona (IT); PASQUALATO, Renzo, I-24124 Bergamo (IT)
(74) Vertreter: Finck, Dieter, Dr.Ing.
(86) Internationale Anmeldenummer: PCT/EP2001/003329
(87) Internationale Veröffentlichungsnummer: WO 2002/077513

(56) Entgegenhaltungen:
- EP-A- 0 165 387
- DE-A- 3 545 697
- DE-U- 1 933 405
- FR-A- 2 538 076

## Beschreibung

Die Erfindung betrifft ein platten- oder hohlzylinderförmiges, aus Schaumstoff hergestelltes und für die Isolierung von Rohren mit verschiedenen Außendurchmessern einsetzbares Isolierteil, das eine Außenwand und eine Innenwand mit ein Stück mit ihr bildenden, von ihr wegragenden und sich in Anpassung an den jeweiligen Rohraußendurchmesser entsprechend elastisch verformenden Vorsprüngen aufweist, die zwischen sich und dem zu isolierenden Rohr sich in Längsrichtung erstreckende Luftkanäle bilden.

Aus der DE 21 18 046 B2 ist bereits ein wärme- und schalldämmender Mantel in Form einer relativ steifen Platte aus Fasermaterial bekannt, die eine Außenseite und eine Innenseite hat. Auf der Innenseite sind Längsrillen ausgespart, zwischen denen Vorsprünge gebildet werden.

Bei einem ähnlich aufgebauten Mantel für Lüftungs- und Klimaanlagen ist nach der DE 25 08 733 A1 die Außenseite der Platte mit einer Dichtfolie und die Innenseite mit den Vorsprüngen mit einem Schutznetz belegt.

Die Elastizität der bekannten Platten ist insbesondere in Richtung ihrer Dicke sehr beschränkt.

Nach der DE 24 61 013 B2 wird zur Bildung eines Verbundrohrs ein Kunststoffmantel auf ein metallisches Kernrohr aufextrudiert. Der Kunststoffmantel besteht aus einem geschäumten Kunststoff, wobei so aufextrudiert wird, dass der Kunststoffmantel auf seiner dem Kemrohr zugewandten Oberfläche durchgehende Längskanäle aufweist, deren Querschnitt eine solche Form besitzen, dass der Kunststoffmantel lediglich mit schmalen Stegen mit dem Kernrohr in Kontakt steht. Der geschäumte Kunststoff besteht aus einer Mischung aus Niederdruckpolyethylen und Hochdruckpolyethylen. Mit einem solchen Kunststoffmantel lässt sich die Isolation des Rohres verglichen mit einem Kunststoffmantel, der vollständig in Kontakt mit dem Kernrohr steht, verbessern.

Das Isolierteil der eingangs genannten Art ist aus der DE 35 45 697 A1 bekannt. Die Vorsprünge sind dabei elastische Distanzhalterungen in Bogenform, die sich abhängig vom Rohraußendurchmesser mehr oder weniger zur Innenwand hinkrümmen, so dass sie einerseits zwischen sich, der Innenwand und der Rohraußenwand sich in Rohrlängsrichtung erstreckende Luftkanäle bilden, die ungleichförmig über der Querschnittsfläche des Isolierteils angeordnet sind, sowie andererseits zwischen sich und der Rohrinnenwand offene oder geschlossene, sich in Rohrlängsrichtung erstreckende Luftkammem bilden, die ebenfalls ungleichförmig über der Querschnittsfläche des Isolierteils angeordnet sind und im Extremfall nicht mehr vorhanden sind.

Die FR 2 538 076 beschreibt eine verstärkte Isolierung aus Polymermaterial für eine unterschiedlich gebogene Dieselkraftstoffleitung mit konstantem Außendurchmesser, die aus einer rohrförmigen Hülle mit nach innen vorstehenden, beabstandeten, zwischen sich Längskanäle bildenden Rippen besteht, innerhalb derer zur Verbesserung der Isolierwirkung und der Elastizität, die für die Anpassung an die Biegungen der Dieselkraftstoffleitung erforderlich ist, weitere sich in Längsrichtung erstreckende Luftkanäle angeordnet sein können.

Die der Erfindung zugrundeliegende Aufgabe besteht darin, das Isolierteil der gattungsgemäßen Art so auszugestalten, dass unter Beibehaltung einer hohen elastischen Verformbarkeit in Dicken- bzw. Radialrichtung bei allen eingesetzten Rohraußendurchmessem und damit verbundenen unterschiedlichen Kompressionen der Vorsprünge die lsoliereigenschaften gezielt verbessert werden können.

Die Aufgabe wird bei dem Isolierteil der gattungsgemäßen Art dadurch gelöst, dass der Schaumstoff ein elastomerer Schaumstoff auf Kautschukbasis mit einer Dichte von 30 bis 120 g/dm³ ist und dass in dem Schaumstoff außerhalb der Vorsprünge sich in Längsrichtung erstreckende gesonderte Luftkanäle in gleichmäßiger Verteilung über seiner Querschnittsfläche vorgesehen sind.

Die Wärmeleitzahl von Luft bei 0°C beträgt 0,025 W/mK. Die Wärmeleitzahl von ungeschäumten Kautschuk liegt bei etwa 0,13 W/mK, wenn die Temperatur 0°C beträgt. Ebenfalls für 0°C liegen die Wärmeleitzahlen für geschäumten Kautschuk in einem Bereich von 0,032 bis 0,036 W/mK, was bei der von der Heizungsanlagenverordnung vorgeschriebenen Temperatur von 40°C einen Bereich von 0,036 bis 0,040 W/mK bedeutet. Für Dämmmaterialien mit diesen Werten liegt der Rechenwert der Wärmeleitfähigkeit nach der Heizungsanlagenverordnung bei 0,04 W/mK.

Es hat sich nun gezeigt, dass aufgrund der erfindungsgemäßen Kombination aus elastomerem Schaumstoff mit den innenseitigen Vorsprüngen und den axialen Luftkanälen einerseits Rohre mit unterschiedlichen Außendurchmessern innerhalb vorgegebener Grenzen aufgenommen werden können, andererseits aber die scheinbare Wärmeleitfähigkeit bei 0°C überraschenderweise Werte von 0,029 bis 0,032 W/mK hat. Das bedeutet, dass verglichen mit herkömmlichem Material eine bessere Isolierwirkung erreicht wird (Rechenwert der Wärmeleitfähigkeit nach Heizungsanlagenverordnung 0,035 W/mK) oder dass verglichen mit herkömmlichem Material bei gleicher Isolierwirkung die Dicke des Isolierteils verringert werden kann, was eine Materialeinsparung und somit einen geringeren Kostenaufwand bedeutet.

Die Dichte des Schaumstoffs liegt vorteilhafterweise zwischen 40 und 80 g/dm³.

Vorzugsweise sind Luftkanäle in Dicken- bzw. Radialrichtung des Isolierteils zwischen seinen Vorsprüngen und seiner Außenwand angeordnet, um bei Verformung der Vorsprünge durch Aufnahme von Rohren mit größerem Außendurchmesser die elastische Materialverschiebung durch Verkleinerung der Querschnittsfläche der Luftkanäle teilweise auszugleichen.

Als günstig hat sich erwiesen, wenn der Anteil der Summe der Querschnittsflächen der gesonderten Luftkanäle bezogen auf die Querschnittsfläche des kompressionsfreien Isolierteils 10 bis 40%, vorzugsweise 20% beträgt.

Für den elastischen Schaumstoff werden vorteilhafterweise Acrylnitril-Butadien-Kautschuk (NBR), Ethylen-Propylen-Dien-Kautschuk (EPDM), Styrolbutadienkautschuk (SBR) oder Butylkautschuk (IIR) verwendet.

Anhand von Zeichnungen werden beispielsweise Ausgestaltungen der Erfindung näher erläutert. Es zeigt:
- Fig. 1: einen Querschnitt durch eine erste Ausführungsform eines Isolierteils in Form eines Hohlzylinders mit einem Rohr mit minimalem Außendurchmesser,
- Fig. 2: die Ausführungsform von Fig. 1 mit einem Rohr mit maximalem Außendurchmesser,
- Fig. 3: im Querschnitt ein gegenüber Fig. 1 modifiziertes Isolierteil in Form eines Hohlzylinders mit einem Rohr mit minimalem Außendurchmesser,
- Fig. 4: in einer Ansicht wie Fig. 3 das Isolierteil mit einem Rohr mit maximalem Außendurchmesser,
- Fig. 5: im Querschnitt eine dritte Ausführungsform eines Isolierteils in Form eines Hohlzylinders mit einem Rohr mit minimalem Außendurchmesser,
- Fig. 6: in einer Ansicht wie Fig. 5 das Isolierteil mit einem Rohr mit maximalem Außendurchmesser,
- Fig. 7: im Querschnitt eine vierte Ausführungsform eines Isolierteils in Form einer kompressionsfreien Platte und
- Fig. 8: in einer Ansicht wie Fig. 7 eine modifizierte kompressionsfreie Platte.

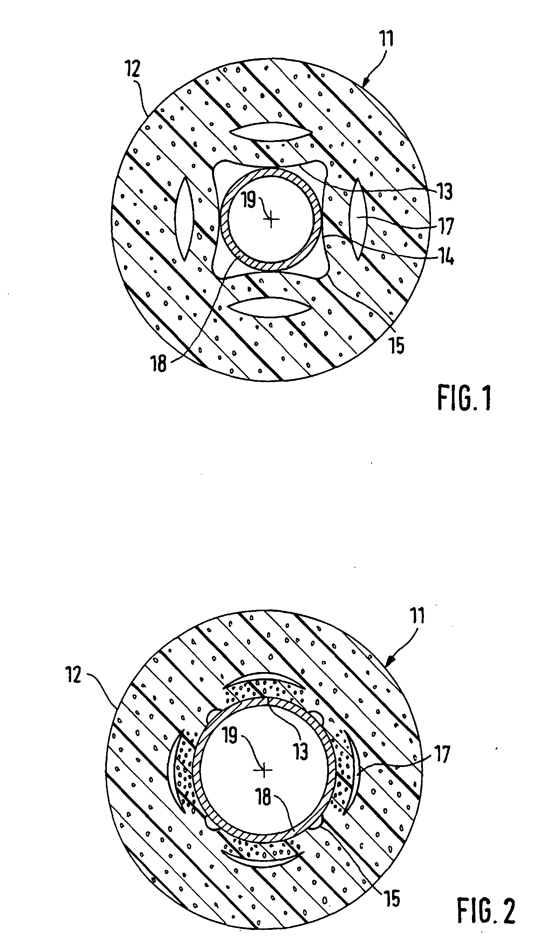

Das in Fig. 1 und 2 gezeigte Isolierteil 11 besteht aus einem Hohlzylinder, der eine Außenwand 12 und eine Innenwand 13 hat. Die Innenwand 13 hat vier im wesentlichen um 90° voneinander beabstandete Vorsprünge 14, die an abgerundete Ecken 15 miteinander verbunden sind. In einem radialen Abstand von jedem Vorsprung 14 ist ein Luftkanal 17 angeordnet, der bei dem gezeigten Ausführungsbeipiel in etwa linsenförmig ausgebildet ist. Den vier Vorsprüngen 14 entsprechen vier Luftkanäle 17. Die Luftkanäle 17 erstrecken sich in Längsrichtung 19 des Isolierteils 11, also im wesentlichen parallel zur seiner Achse.

Gemäß Fig. 1 ist zwischen den vier Vorsprüngen 14 ein Rohr 18 gehalten, dessen Außendurchmesser so bemessen ist, daß das Rohr 18 von den Vorsprüngen 14 abgestützt gehalten wird, ohne daß die Vorsprünge 14 verformt werden. Das gezeigte Rohr 18 hat somit den minimalen Außendurchmesser.

In Fig. 2 ist zwischen die vier Vorsprünge 14 ein Rohr 18 mit maximalem Außendurchmesser eingefügt, wodurch die Vorsprünge 14 sich elastisch verformen und dadurch elastisches Material in Richtung der Luftkanäle 17 verschoben wird, die dadurch ihr Volumen verkleinern und die Form einer Mondsichel annehmen. Die abgerundeten Ecken 15 sind jedoch noch frei und bilden achsparallele Luftkanäle, die von der Außenwand des Rohrs 18 begrenzt sind.

Aufgrund der elastischen Materialeigenschaften des elastomeren Schaumstoffs auf Kautschukbasis läßt sich das Isolierteil 11 für Rohre 18 in dem Bereich vom gezeigten minimalen Außendurchmesser bis zum gezeigten maximalen Außendurchmesser einsetzen. Die Fertigung des Isolierteils 11 erfolgt äußerst einfach durch Extrudieren. Die Luftkanäle 17 erlauben einerseits eine leichtere Verformung der Vorsprünge 14 und sorgen andererseits dafür, daß zusammen mit dem Schaumstoff die scheinbare Wärmeleitfähigkeit verglichen mit dem reinen Schaumstoff überraschend stark reduziert wird.

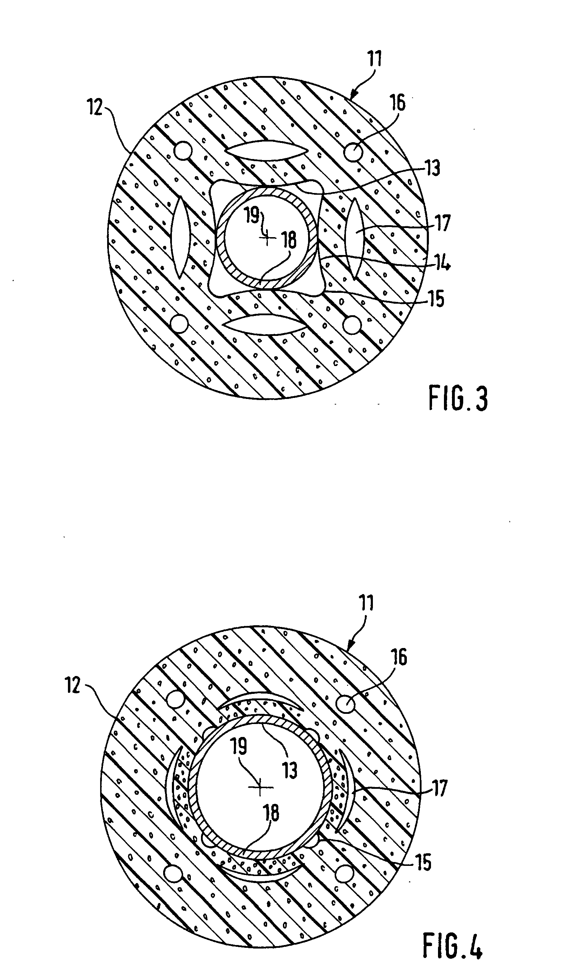

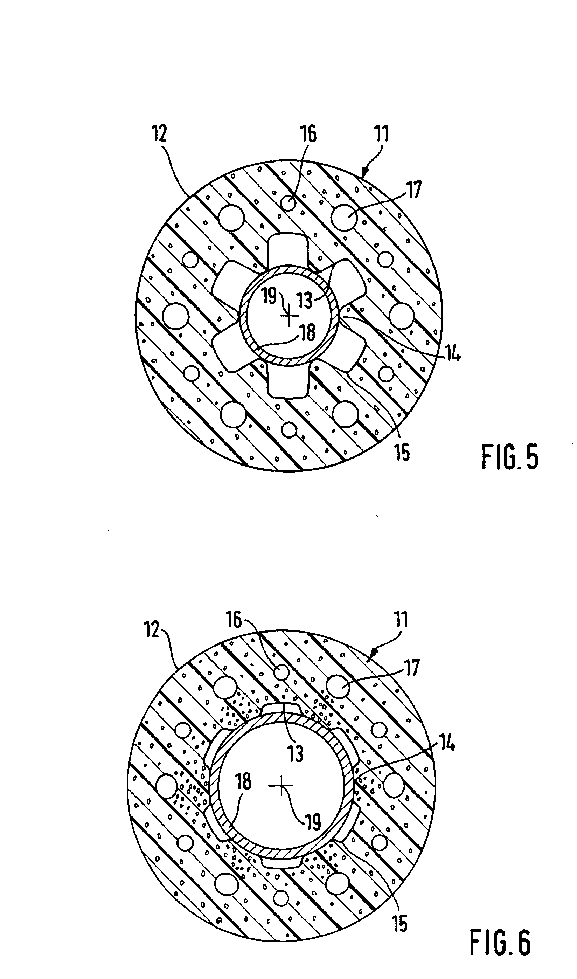

Bei den Ausführungsformen von Fig. 3 und 4 sind zusätzlich zu den linsenförmigen Luftkanälen 17 vier zusätzliche Luftkanäle 16 vorgesehen, die bei kompressionsfreiem Hohlzylinder 11, also bei Aufnahme des Rohrs 18 mit minimalem Durchmesser, einen Kreisquerschnitt haben. Um eine gleichmäßige Verteilung der Luftkanäle 17 über den Querschnitt zu gewährleisten, ist jeder zusätzliche Luftkanal 16 im gleichen Abstand zwischen den Ecken der linsenförmigen Luftkanäle 17 angeordnet. In Fig. 4 ist das Isolierteil von Fig. 3 in dem Zustand gezeigt, in dem es das Rohr mit maximalem Außendurchmesser aufnimmt, wobei sich der Kreisquerschnitt der Luftkanäle 16 zu einer Elipse abflacht. Durch die zusätzlichen Luftkanäle 16 wird das Luftvolumen in dem elastomeren Schaumstoff auf Kautschukbasis vergrößert, was zur Reduzierung der Wärmeleitzahl beiträgt.

In der Ausgestaltung von Fig. 5 und 6 hat der das Isolierteil 11 bildende Hohlzylinder an seiner Innenwand 13 sechs im gleichen Abstand vorgesehene Vorsprünge 14 mit großen Eckenbereichen 15 dazwischen. Den sechs Vorsprüngen 14 sind in radialem Abstand sechs kreisförmige Luftkanäle 17 zugeordnet. Jeder Ecke 15 ist in radialem Abstand ein Luftkanal 16 zugeordnet, dessen Querschnitt kleiner ist als des Luftkanals 17.

In Fig. 5 nimmt das Isolierteil 11 das Rohr 18 mit minimalem Außendurchmesser auf, das zwischen den Vorsprüngen 14 gehalten ist.

In Fig. 6 nimmt das Isolierteil 11 das Rohr 18 mit maximalem Außendurchmesser auf. In diesem Zustand verbleiben im Bereich der Ecken 15 noch flache Luftkanäle zwischen Schaumstoff und Rohraußenwand. Durch die Materialverdrängung des expandierten Schaumstoffs flacht sich die Kreisform der den Vorsprüngen 14 zugeordneten Luftkanäle 17 auf ihrer zum Vorsprung 14 zugewandten Seite ab.

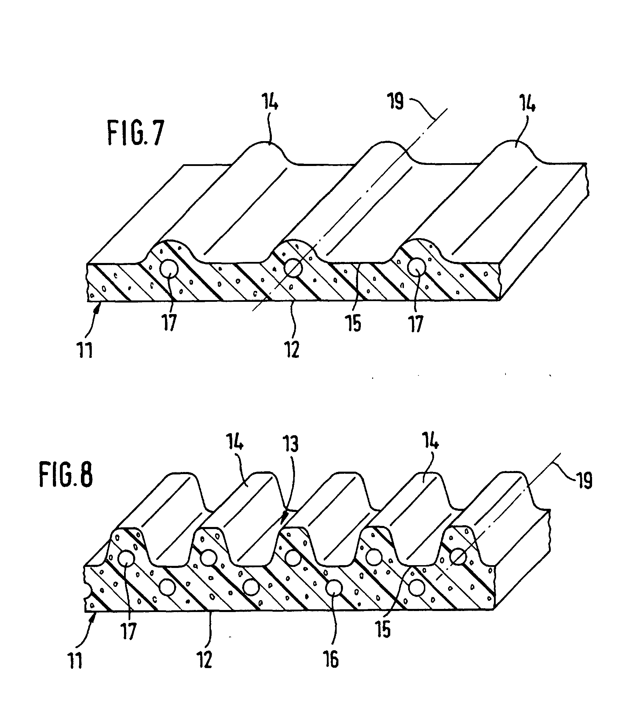

Das in Fig. 7 gezeigte Isolierteil 11 hat die Form einer Platte, die aus dem gleichen elastomeren Schaumstoff auf Kautschukbasis wie die hohlzylindrischen Isolierteile von Fig. 1 bis 6 besteht. Das Isolierteil 11 in Form der Platte hat eine ebene Außenwand 12 und eine in Dickenrichtung der Platte gegenüberliegende Innenwand 13, die von voneinander beabstandeten, von ihr hochstehenden leistenförmigen Vorsprüngen 14 und dazwischenliegenden Vertiefungen 15 gebildet wird. Die Vorsprünge 14 und die Vertiefungen 15 erstrecken sich in der strichpunktiert gezeigten Längsrichtung 19 der Platte. Zwischen den Vorsprüngen 14 und der Außenwand 12 sind in Dickenrichtung Luftkanäle 17 vorgesehen, die sich in Längsrichtung 19 in der Platte 11 erstrecken.

Während in der Ausgestaltung von Fig. 7 die Vorsprünge 14 kontinuierlich gewölbt ausgebildet sind, verlaufen sie in der Ausgestaltung von Fig. 8 im Querschnitt zahnartig. Dabei sind in Dickenrichtung zwischen den Vertiefungen 15 und der Außenwand 12 zusätzliche Luftkanäle 16 vorgesehen.

Die Isolierteile 11 in Form von Platten, wie sie als Beispiel in Fig. 7 und 8 dargestellt sind, werden um gewölbte zu isolierende Gegenstände herumgelegt und können einem unterschiedlichen Anpressdruck ausgesetzt werden, wodurch sich die Vorsprünge 14 durch Zusammenpressen verkleinern und bei stärkeren Anpressdrucken sich auch die Luftkanäle 17 und später auch die Luftkanäle 16 entsprechend verformen.

Die Ausgestaltung des Isolierteils hinsichtlich Zahl und Form der Vorsprünge und der Luftkanäle ist nicht begrenzt, wesentlich ist jedoch die gleichförmige Verteilung der Luftkanäle in dem expandierten Schaumstoff über der Querschnittsfläche des Isolierteils sowie ihr Querschnittsanteil, der bezogen auf die Querschnittsfläche des Isolierteils bevorzugt 20% beträgt.

## Patentansprüche

1. Platten- oder hohlzylinderförmiges, aus Schaumstoff hergestelltes und für die Isolierung von Rohren mit verschiedenen Außendurchmessern einsetzbares Isolierteil, das eine Außenwand (12) und eine Innenwand (13) mit ein Stück mit ihr bildenden, von ihr wegragenden und sich in Anpassung an den jeweiligen Rohraußendurchmesser entsprechend elastisch verformenden Vorsprüngen (14) aufweist, die zwischen sich und dem zu isolierenden Rohr (18) sich in Längsrichtung erstreckende Luftkanäle (15) bilden,
**dadurch gekennzeichnet,**
- **dass** der Schaumstoff ein elastomerer Schaumstoff auf Kautschukbasis mit einer Dichte von 30 bis 120 g/dm³ ist und
- **dass** in dem Schaumstoff außerhalb der Vorsprünge (14) sich in Längsrichtung erstreckende gesonderte Luftkanäle (16, 17) in gleichmäßiger Verteilung über seiner Querschnittsfläche vorgesehen sind.

2. Isolierteil nach Anspruch 1, **dadurch gekennzeichnet, dass** die Dichte des Schaumstoffs 40 bis 80 g/dm³ beträgt.

3. Isolierteil nach Anspruch 1 oder 2, **dadurch gekennzeichnet, dass** die gesonderten Luftkanäle (17) in Dickenrichtung der Platte bzw. in Radialrichtung des Hohlzylinders zwischen den Vorsprüngen (14) und der Außenwand (12) angeordnet sind.

4. Isolierteil nach einem der vorhergehenden Ansprüche, **dadurch gekennzeichnet, dass** der Anteil der Summe der Querschnittsflächen der gesonderten Luftkanäle (16, 17) bezogen auf die Querschnittsfläche des kompressionsfreien Isolierteils (11) 10 bis 40% beträgt.

5. Isolierteil nach einem der vorhergehenden Ansprüche, **dadurch gekennzeichnet, dass** der elastomere Schaumstoff aus Acrylnitril-Butadien-Kautschuk (NBR), aus Ethylen-Propylen-Dien-Kautschuk (EPDM), aus Styrolbutadienkautschuk (SBR) oder aus Butylkautschuk (IIR) besteht.

## Claims

1. A sheet-like or hollow cylindrical insulating member made of foamed material and which can be used for insulating pipes of different outer diameters, which member has an outer wall (12) and an inner wall (13) with projections (14) forming one piece therewith which project therefrom and which are elastically deformed correspondingly in adaptation to the respective pipe outer diameter, which projections form longitudinally extending air ducts (15) between themselves and the pipe (18) to be insulated, **characterised in**
- **that** the foamed material is a rubber-based elastomeric foamed material having a density of 30 to 120 g/dm³ and in
- **that** separate longitudinally extending air ducts (16,17) are provided in the foamed material outside the projections (14), uniformly spaced apart over the cross-sectional area thereof.

2. An insulating member according to Claim 1, **characterised in that** the density of the foamed material is 40 to 80 g/dm³.

3. An insulating member according to Claim 1 or 2, **characterised in that** the separate air ducts (17) are disposed in the thickness direction of the sheet or in the radial direction of the hollow cylinder between the projections (14) and the outer wall (12).

4. An insulating member according to any one of the preceding Claims, **characterised in that** the proportion of the sum of cross-sectional areas of the separate air ducts (16,17) relative to the cross-sectional area of the compression-free insulating member (11) is 10 to 40 %.

5. An insulating member according to any one of the preceding Claims, **characterised in that** the elastomeric foamed material consists of acrylonitrile-butadiene rubber (NBR), of ethylene-propylene-diene rubber (EPDM), of styrene-butadiene rubber (SBR) or of butyl rubber (IIR).

## Revendications

1. Pièce d'isolation sous forme de panneau ou de cylindre creux, réalisée en mousse et utilisable pour l'isolation de tubes de différents diamètres extérieurs, comprenant une paroi extérieure (12) ainsi qu'une paroi intérieure (13) munie de saillies (14) formant avec elle une seule pièce, partant dans le sens opposé et se déformant élastiquement en s'adaptant au diamètre extérieur du tube respectif et qui forment entre elles et le tube à isoler (18) des canaux d'air (15) s'étendant dans le sens longitudinal,
**caractérisée en ce que**
- la mousse est une mousse élastomère à base de caoutchouc d'une densité comprise entre 30 et 120 g/dm³ et que
- dans la mousse, en dehors des saillies (14), des canaux d'air séparés (16, 17) sont prévus, s'étendant dans le sens longitudinal et répartis uniformément sur l'aire de sa section.

2. Pièce d'isolation selon la revendication 1, **caractérisée en ce que** la densité de la mousse est comprise entre 40 et 80 g/dm³.

3. Pièce d'isolation selon la revendication 1 ou 2, **caractérisée en ce que** les canaux d'air séparés (17) sont disposés dans le sens de l'épaisseur du panneau resp. dans le sens radial du cylindre creux entre les saillies (14) et la paroi extérieure (12).

4. Pièce d'isolation selon l'une des revendications précédentes, **caractérisée en ce que** la proportion de la somme des aires des sections des canaux d'air séparés (16, 17) par rapport à l'aire de la section de la pièce d'isolation (11) non comprimée est de 10 à 40 %.

5. Pièce d'isolation selon l'une des revendications précédentes, **caractérisée en ce que** la mousse élastomère est en caoutchouc acrylonitrile-butadiène (NBR), en caoutchouc éthylène-propylène-diène (EPDM), en caoutchouc styrène-butadiène (SBR) ou en caoutchouc butyle (UR).
